(19) Europäisches Patentamt
European Patent Office
Office européen des brevets

(11) Veröffentlichungsnummer: **0 257 423 B1**

# (12) EUROPÄISCHE PATENTSCHRIFT

(45) Veröffentlichungstag der Patentschrift: **20.01.93**

(51) Int. Cl.$^5$: **C08K 9/06**, C09C 3/12

(21) Anmeldenummer: **87111539.0**

(22) Anmeldetag: **10.08.87**

(54) **Hydrophobe Pigmente und Füllstoffe für die Einarbeitung in Kunststoffe.**

(30) Priorität: **21.08.86 DE 3628320**

(43) Veröffentlichungstag der Anmeldung:
**02.03.88 Patentblatt 88/09**

(45) Bekanntmachung des Hinweises auf die Patenterteilung:
**20.01.93 Patentblatt 93/03**

(84) Benannte Vertragsstaaten:
**BE CH DE ES FR GB IT LI NL**

(56) Entgegenhaltungen:
**EP-A- 0 090 396**

(73) Patentinhaber: **BAYER AG**
**W-5090 Leverkusen 1 Bayerwerk(DE)**

(72) Erfinder: **Braun, Rolf Michael, Dr.**
**Mergelskull 8**
**W-4150 Krefeld(DE)**
Erfinder: **Panek, Peter, Dr.**
**Bärenstrasse 35**
**W-4150 Krefeld(DE)**
Erfinder: **Bornefeld, Horst, Dr.**
**Dörperhofstrasse 39**
**W-4150 Krefeld(DE)**
Erfinder: **Räde, Dieter, Dr.**
**Appellweg 10**
**W-4150 Krefeld(DE)**
Erfinder: **Ritter, Wolfgang, Dr.**
**Buschstrasse 163**
**W-4150 Krefeld(DE)**

**EP 0 257 423 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft hydrophobe Pigmente und Füllstoffe, ihre Herstellung und ihre Verwendung zur Einarbeitung in Kunststoffe.

Eine einwandfreie Dispergierbarkeit von pulverförmigen Pigmenten und Füllstoffen in Kunststoffen ist schwierig, insbesondere bei Folien, Hohlkörpern und Monofilen. Unzerteilte Agglomerate sind als Stippen erkennbar und können die mechanischen Eigenschaften negativ beeinflussen. Schlecht verteilte Pigmente ergeben ungleichmäßige Einfärbungen. Meist wird auch die optimale Wirksamkeit der Pigmente nicht voll ausgenutzt. Um die Dispergierbarkeit von Pigmenten und Füllstoffen in Kunststoffen zu verbessern ist es deshalb üblich, die Oberfläche der feinteiligen Feststoffe mit hydrophobierenden Substanzen zu modifizieren.

Zur Hydrophobierung verschiedener Oberflächen können beispielsweise Polydimethylsiloxane eingesetzt werden (vgl. Noll, Chemie und Technologie der Silicone; 2. Auflage 1968, S. 386 ff).

Gemäß JP-A 7 956 083 und JP-A 8 143 264 erhält man hydrophobe Pigmente mit verbesserter Dispergierbarkeit durch gemeinsames Mahlen der feinteiligen Feststoffe mit Polymethylhydrogensiloxan.

Die so erhaltenen Pigmente weisen aber ein sehr starkes Stauben auf, z.B. bei der Herstellung, Handhabung und Verarbeitung der Pigmente.

Das Stauben kann gemäß DE-A 2 001 469 dadurch reduziert werden, daß zusätzlich zu einem Siloxan ein Ester eingesetzt wird. Dabei verschlechtern sich aber sowohl die Dispergierbarkeit als auch das Fließ- und Dosierverhalten der Pigmente.

Um freifließende, leicht dosierbare und staubarme Pigmente zu erhalten, kann man die Pigmente einem Granulationsverfahren unterwerfen.

Dabei kann man beispielsweise trockene, mikronisierte Pigmente in einer verdampfbaren Flüssigkeit aufschlämmen und die Aufschlämmung in einem Zerstäubungstrockner trocknen (GB-A 809 284).

Die so erhältlichen granulierten Pigmente weisen aber Mängel in der Dispergierbarkeit in Kunststoffen auf, wodurch die mechanischen Eigenschaften der Kunststoffe (z.B. Kerbschlagzähigkeit) erheblich verschlechtert werden.

Der Erfindung lag nun die Aufgabe zugrunde, hydrophobe Pigmente und Füllstoffe bereitzustellen, die die Nachteile der bekannten Pigmente und Füllstoffe nicht aufweisen.

Überraschenderweise wurden nun Pigmente und Füllstoffe gefunden, die diese Anforderungen in hervorragender Weise erfüllen.

Es handelt sich dabei um hydrophobe Pigmente und Füllstoffe mit einem Gehalt von 0,05 bis 10 Gew.-% - bezogen auf die Pigment- oder Füllstoffmenge -Organopolysiloxan der allgemeinen Formel

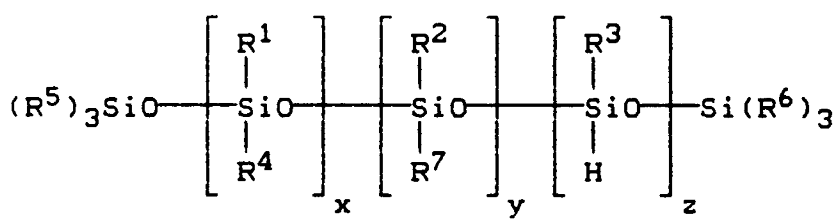

wobei in der allgemeinen Formel
x = 0 - 500,
y = 5 - 500,
z = 5 - 500,
$R^1$, $R^2$, $R^3$, $R^4$, $R^5$ und $R^6$ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert sein kann,
$R^7$ = für einen Alkylrest mit 6 - 18 C-Atomen steht und
wobei von der Anzahl der an Si gebundenen Reste jeweils mindestens 3 % $R^7$ und H sind.

Besonders vorteilhafte Eigenschaften haben Pigmente und Füllstoffe mit dem genannten Gehalt an Organopolysiloxanen der beschriebenen allgemeinen Formel, wenn in der allgemeinen Formel die Reste, $R^1$, $R^2$, $R^3$, $R^4$, $R^5$ und $R^6$ für Methylgruppen stehen.

Bevorzugt sind erfindungsgemäße Pigmente und Füllstoffe wenn in der allgemeinen Formel für die Organopolysiloxane

x = 0 bis 100,
y = 5 bis 100,
z = 5 bis 100
wobei x + y + z = 25 bis 300
und wobei von der Anzahl der an Si gebundenen Resten mindestens 3 % $R^7$ und mindestens 10 % H sind.

Ebenfalls bevorzugt sind erfindungsgemäße Pigmente und Füllstoffe, wenn in der allgemeinen Formel für die Organopolysiloxane
x = 0,
y = 5 bis 50,
z = 5 bis 60,
wobei y + z größer 25 ist und von der Anzahl der an Si gebundenen Reste mindestens 10 % $R^7$ und mindestens 30 % H sind.

In den Endgruppen können die Reste $R^5$ und $R^6$ jeweils auch für unterschiedliche Substituenten stehen, was bedeutet, daß an einem endständigen Siliciumatom auch unterschiedliche Substituenten gebunden sein können.

Die Reste $R^7$ können geradkettige und/oder verzweigte Alkylreste sein.

Beispiele für geradkettige Reste $R^7$ sind Hexyl-, Octyl-, Nonyl-, Decyl-, Dodecyl- und Tetradecylreste; Beispiele für verzweigte Alkylreste sind 3-Methylpentyl-, 2,3-Dimethylbutyl-, 3-Buthylhexyl- und 4-Propyloctylreste. Dabei können die Organopolysiloxane jeweils gleiche oder auch unterschiedliche Reste $R^7$ enthalten. Bevorzugte Alkylreste $R^7$ sind der Dodecyl- und der Tetradecylrest, insbesondere auch Gemische aus beiden.

Gegenstand der vorliegenden Erfindung sind ferner hydrophobe Pigmente und Füllstoffe mit einem Gehalt von 0,05 bis 10 Gew.-% - bezogen auf die Pigment- oder Füllstoffmenge - einer Kombination von erfindungsgemäßen Organopolysiloxanen und Polyorganohydrogensiloxanen der allgemeinen Formel

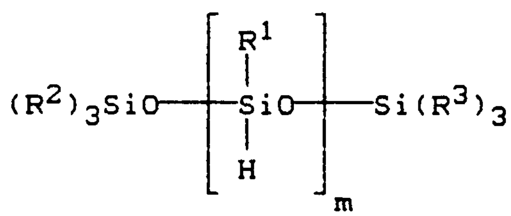

,

wobei in der allgemeinen Formel
m = 5 bis 200 und die Reste $R^1$, $R^2$, $R^3$ unabhängig voneinander die oben stehende Bedeutung haben und Organopolysiloxane und Polyorganohydrogensiloxane im Mengenverhältnis 4:1 bis 1:4 vorliegen.

Die erfindungsgemäßen Pigmente können sowohl gemahlene und/oder mikronisierte als auch granulierte anorganische und organische Pigmente sein.

Beispiele für erfindungsgemäße anorganische Pigmente sind Titandioxidpigmente, welche nach dem Sulfat-oder Chloridprozeß hergestellt sind, in der Rutil- oder Anatasform vorliegen und gegebenenfalls gitterstabilisiert sein können. Weitere Beispiele sind Zinkoxid, Lithopone, Eisenoxidpigmente, Cadmiumpigmente, wie Cadmiumsulfid oder -sulfoselenid, Ultramarinpigmente, Chromatpigmente, Chromoxidpigmente, oxidische Mischphasenpigmente wie Spinell-und Rutil-Mischphasenpigmente, wobei sowohl Farb- als auch Magnetpigmente eingeschlossen sind. Beispiele für erfindungsgemäße Füllstoffe sind natürliche und gefällte Calciumcarbonate, Aluminiumhydroxide, Kieselsäuren unterschiedlicher Herstellungsverfahren, Talk, Glimmer, Kaolin. Die anorganischen Farb- und Magnetpigmente und Füllstoffe können gegebenenfalls einer vorherigen anorganischen Nachbehandlung unterworfen worden sein.

Geeignete organische Pigmente sind Azo-Pigmente, beispielsweise aus der Arylamid-, Pyrazolon-, $\beta$-Naphthol-und $\beta$-Oxynaphthoesäure-Reihe, Metallkomplex-Pigmente, Anthrachinon-Pigmente, Polycyclische Pigmente, beispielsweise aus der Perylen-, Perinon-, Chinacridon-, Isoindolin-, Dioxazin, Indanthren-, Thioindigo-, Anthanthron-, und Pyrrolo-Pyrrol-Reihe und Phthalocyaninpigmente, wie beispielsweise Phthalocyanin-Blau und Phthalocyanin-Grün.

Bevorzugt sind solche erfindungsgemäßen Pigmente und Füllstoffe, die einen Gehalt von 0,1 bis 5 Gew.-% Organopolysiloxan oder der Kombination Organopolysiloxan/Polyorganohydrogensiloxan, bezogen auf die Pigment- und/oder Füllstoffmenge, aufweisen. Insbesondere bei Pigmenten werden Produkte mit einem Gehalt von 0,15 bis 2 Gew.-% an Organopolysiloxan oder der Kombination

Organopolysiloxan/Polyorganohydrogensiloxan besonders bevorzugt.

Bei granulierten Pigmenten werden Produkte bevorzugt, die einen Gehalt von 0,3 bis 1,5 Gew.-% an Organopolysiloxan oder der Kombination Organopolysiloxan/Polyorganohydrogensiloxan haben.

Die Herstellung der erfindungsgemäßen Pigmente und Füllstoffe erfolgt durch Aufsprühen und/oder Untermischen des Organopolysiloxans oder der Kombination Organopolysiloxan/Polyorganohydrogensiloxan als Gemisch oder getrennt in beliebiger Reihenfolge vorzugsweise vor und/oder während einer abschließenden Mahlung.

Es ist dabei gleichgültig, ob das Organopolysiloxan oder die Kombination Organopolysiloxan/Polyorganohydrogensiloxan den bei der Pigment-bzw. Füllstoffherstellung anfallenden feuchten Filterkuchen, Pasten, Aufschlämmungen vor der Trocknung zugemischt wird oder ob es dem trockenen Gut unmittelbar vor der abschließenden Mahlung in geeigneter Weise, beispielsweise durch Aufsprühen beigegeben oder, im Falle einer Dampfstrahlmahlung, dem Dampf unmittelbar bei der Einspeisung in die Strahlmühle zugesetzt wird. Das Organopolysiloxan oder die Kombination Organopolysiloxan/Polyorganohydrogensiloxan kann gegebenenfalls vor der Zugabe in eine Emulsion überführt werden.

Bei der Herstellung von granulierten Pigmenten wird das Organopolysiloxan oder die Kombination Organopolysiloxan/Polyorganohydrogensiloxan als Gemisch oder getrennt in beliebiger Reihenfolge dem Pigment vor und/oder während der Zerstäubungstrocknung zugesetzt. Bevorzugt wird das Organopolysiloxan oder die Kombination Organopolysiloxan/Polyorganohydrogensiloxan einer Pigmentaufschlämmung vor der Zerstäubungstrocknung zugemischt. Dabei kann das Organopolysiloxan oder die Kombination Organopolysiloxan/Polyorganohydrogensiloxan vorher in eine Emulsion überführt oder direkt in die Pigmentaufschlämmung eingerührt werden.

Die Pigmentaufschlämmung kann ausschließlich aus Pigment und einer verdampfbaren Flüssigkeit, z. B. Wasser, bestehen und zwar in einem Mengenverhältnis, das eine pump- und zerstäubbare Aufschlämmung ergibt. Werden höhere Pigmentgehalte gewünscht, kann die dann erforderliche Viskositätserniedrigung durch Zusatz von verflüssigend wirkenden Substanzen, wie beispielsweise Polyphosphaten, Ameisensäure und Polyacrylaten unterschiedlicher Molekulargewichtsverteilung erreicht werden.

Die Zerstäubungstrocknung wird in an sich bekannter Weise durchgeführt. Es ist gleichgültig, ob die Zerstäubung mittels Ein- oder Zweistoffdüsen oder mit rotierenden Zerstäuberscheiben erfolgt.

Bei der Behandlung der Pigmente und Füllstoffe mit der Kombination Organopolysiloxan/Polyorganohydrogensiloxan ist es möglich, durch Wahl eines geeigneten Mengenverhältnisses der beiden Komponenten, einfach und schnell die gewünschte Modifizierung für unterschiedliche Pigment- und Füllstofftypen weitgehend zu optimieren, ohne hierfür eine Vielzahl unterschiedlicher Organopolysiloxane gemäß der angebenen allgemeinen Formel vorrätig halten zu müssen.

Die erfindungsgemäßen Pigmente und Füllstoffe weisen eine starke Hydrophobierung auf und sind aufgrund ihrer sehr guten Dispergierbarkeit zur Einarbeitung in Kunststoffe besonders geeignet. Sie können aber auch vorteilhaft zur Einarbeitung in Lacke, Baustoffe, Magnetbänder und andere magnetische Informationsträger sowie magnetische und unmagnetische Toner eingesetzt werden.

Bei der Herstellung und Verarbeitung der erfindungsgemäßen Pigmente und Füllstoffe kommt es nur zu sehr geringer Staubentwicklung. Weiterhin ist bei den erfindungsgemäßen Pigmenten und Füllstoffen eine sehr gute Lagerstabilität zu beobachten, d.h. auch bei längerer Lagerung werden Hydrophobierung sowie Dispergierbarkeit nicht wesentlich beeinträchtigt, bei Farbpigmenten ist auch der nachteilige Einfluß der Lagerung auf die farbmetrischen Daten stark verringert. Unter Erhaltung der angeführten Vorteile kann auch das Fließ-und Dosierverhalten der gemahlenen oder mikronisierten Pigmente und Füllstoffe verbessert werden, indem ein Organopolysiloxan verwendet wird, bei dem innerhalb der angegebenen Zusammensetzung der Anteil an Si-H-Gruppen möglichst hoch gewählt wird.

Die erfindungsgemäßen granulierten Pigmente sind freifließend, weisen ein hervorragendes Dosierverhalten auf und stauben praktisch nicht. Ihre Dispergierbarkeit in den verschiedensten Kunststoffen ist sehr gut, wobei gleichzeitig die Beeinträchtigung der mechanischen Werte der damit pigmentierten Kunststoffe sehr stark vermindert wird. Durch die gute Dispergierbarkeit werden auch gute optische Eigenschaften, beispielsweise hinsichtlich Aufhellvermögen, erreicht. Das Produkt kann ohne Schwierigkeiten abgepackt, gelagert, transportiert, dosiert und weiterverarbeitet werden.

Die erfindungsgemäßen Pigmente und Füllstoffe werden nach den nachfolgend beschriebenen Vorschriften geprüft. Zur Ermittlung des Grades der Hydrophobierung werden 0,5 g Pigment bzw. Füllstoff auf die Oberfläche von ca. 200 ml vollentsalztem Wasser, das sich in einem 400 ml-Becherglas befindet, aufgestreut. Der Grad der Hydrophobierung wird nach Umrühren mit einem Glasstab visuell bewertet.

Staubverhalten:

Das Staubverhalten wird in einer Staubmeßapparatur geprüft, indem 40 g Pigment bzw. Füllstoff auf einmal durch ein senkrechtes Glasrohr von 45 mm Durchmesser über eine Fallhöhe von 1300 mm in einen 2-1-Glasstutzen von 120 mm Durchmesser fallen gelassen werden. Der dabei entstehende Staub wird mittels eines Luftstromes von 1 $m^3/h$ durch ein Glasrohr von 30 mm Durchmesser, in dem die Gasströmung ca. 40 cm/s beträgt, an einer Photozelle vorbeigeleitet. Dabei wird die durch den Staub bedingte Abnahme der Transmission gemessen und in bekannter Weise in Extinktionswerte umgerechnet. Die Extinktionswerte stellen ein direktes Maß für die Stärke der Staubentwicklung dar. Extinktionswerte unter 0,05 charakterisieren eine sehr geringe, solche zwischen 0,05 und 0,1 eine geringe, zwischen 0,1 und 0,2 eine mäßige, zwischen 0,2 und 0,4 eine starke und über 0,4 eine sehr starke Staubentwicklung.

Dispergierbarkeit in Kunststoffen:

Die Dispergierbarkeit in Kunststoffen wurde in Polyvinylchlorid (PVC) nach dem Einstreutest und in Polyethylen (PE) nach einem sogenannten Blasfolientest geprüft.

Beim Einstreutest werden zur Prüfung von Weißpigmenten 50 g PVC-Compound (Grundmischung A nach DIN 53 775) und 0,05 g Flammruß in einem PE-Becher mit einem Spatel innig vermischt und auf einem Mischwalzwerk bei 165 °C, Friktion 1:1,2, in 2 Minuten zu einem schwarzen Fell ausgewalzt. Eine abgewogene Menge von 5 g Pigment wird innerhalb 0,5 min aufgestreut. Auf den Walzen hängengebliebenes Pigment wird mit einem Kupferspachtel abgekratzt und ebenfalls in das Fell eingearbeitet. Anschließend wird die Zeit genommen und unter ständigem manuellem Wenden vom PVC-Fell nach 1,2,4,8 und 16 min. Walzdauer je ca. 10 × 10 cm große Proben entnommen.

Bei der Prüfung von Buntpigmenten wird analog verfahren; nur werden die weiße Grundmischung B nach DIN 53 775 und 0,5 g Buntpigment eingesetzt.

Die Beurteilung erfolgt anhand der Stippen:

| | | |
|---|---|---|
| Stufe 1 | sehr gut | keine Stippen |
| 2 | gut | Stippen bis 2 min |
| 3 | mäßig | Stippen bis 4 min |
| 4 | schlecht | Stippen bis 8 min |
| 5 | sehr schlecht | Stippen bis 16 min |

Beim Blasfolientest wird zunächst aus 150 g Hochdruck-PE (Schmelzindex ca. 20) und 350 g Pigment ein sogenanntes Masterbatch hergestellt. Hierfür werden Pigment und Kunststoffpulver in einem Plastikbeutel durch Schütteln gemischt, durch ein 2-mm-Sieb gegeben und in einem Zweiwellenkneter bei 195 °C und 60 U/min verbatcht. Anschließend werden 500 g Hochdruck-PE (Schmelzindex ca. 0,5) mit 7,1 g Masterbatch vermischt, einmal bei 220 °C extrudiert und zu Folien verblasen. 0,4 $m^2$ der Folie werden auf Pigmentstippen untersucht.

Zur Prüfung der erfindungsgemäßen granulierten Pigmente wurden folgende Eigenschaften gemessen:

Mittlerer Durchmesser der Granulate:

Aus Siebanalysen mit Sieben zwischen 0,035 und 1,0 mm Maschenweite wird der mittlere arithmetische Durchmesser der Massenverteilung $\bar{D}_{av}$ gemäß DIN 53 206 bestimmt.

$$\bar{D}_{av} = \frac{\sum v_i \cdot D_i}{\sum v_i}$$

$v_i$ = relativer Anteil der Teilchenmassen der i-ten Siebfraktion
$D_i$ = Fraktionsmitte der i-ten Siebfraktion

Fließverhalten:

Ein Glastrichter, oberer Durchmesser ca. 70 mm, Austrittsdurchmesser 3 mm, wird mit Pigment gefüllt und das Ausfließen nach folgender Skala bewertet:
sehr gutes Fließverhalten:
Pigment fließt frei aus dem Trichter
gutes Fließverhalten:
Pigment fließt nach einmaligem Anstoßen des Trichters aus
mäßiges Fließverhalten:
Pigment fließt nach mehrmaligem Anstoßen des Trichters aus
schlechtes Fließverhalten:
Pigment fließt trotz häufigen Anstoßes nicht aus

Dispergierbarkeit in PE:

Die Prüfung der Dispergierbarkeit in PE erfolgt analog dem oben beschriebenen Blasfolientest. 0,4 $m^2$ der erhaltenen Folien werden auf Pigmentstippen untersucht.

Die Beurteilung erfolgt anhand der Zahl der Stippen:

| | |
|---|---|
| sehr gut | bei weniger als 10 Stippen |
| gut | bei bis zu 20 Stippen |
| mäßig | bei bis zu 50 Stippen |
| schlecht | bei mehr als 50 Stippen |

Kerbschlagzähigkeit in Acrylnitril-Butadien-Styrol-Terpolymer (ABS):

90 Teile Novodur PH-AT® (Handelsprodukt der BAYER AG) und 10 Teile Pigment werden gemischt und einmal über einen Zweiwellenextruder bei 190 °C extrudiert. Die abgezogenen Stränge werden granuliert, getrocknet und mittels einer Spritzgießmaschine bei 220 °C zu Normprüfstäben verspritzt. Von je 10 Normprüfstäben wird nach DIN 53 453 die Kerbschlagzähigkeit ermittelt. Als Kontrolle dienten unpigmentierte Proben.

Bei dem verwendeten unpigmentierten Novodur PH-AT® wurde eine Kerbschlagzähigkeit von 10,5 $kJ/m^2$ gefunden.

Die Kerbschlagzähigkeit von pigmentierten Novodur PH-AT® wurde beurteilt als

| | |
|---|---|
| sehr gut | bei 9,0 $kJ/m^2$ und darüber |
| gut | bei 8,5 - 8,9 $kJ/m^2$ |
| mäßig | bei 8,0 - 8,4 $kJ/m^2$ |
| schlecht | bei unter 8,0 $kJ/m^2$ |

Nachfolgend wird die Herstellung der erfindungsgemäßen Pigmente und Füllstoffe beispielhaft erläutert. Dabei beziehen sich alle Angaben von Teilen und Prozentsätzen auf das Gewicht. Die spezifischen Oberflächen wurden mittels Einpunktmethode nach BET ($N_2$-Methode, DIN 66 131) bestimmt.

Die Beispiele 1 bis 13, 16 und 17 mit den Vergleichsbeispielen A bis E und G bis I betreffen dabei pulverförmige Pigmente und Füllstoffe und die Beispiele 14 und 15 mit dem Vergleichsbeispiel F betreffen Pigmentgranulate.

Die Ergebnisse der Untersuchungen sind zum Vergleich in den Tabellen 1 bis 4 gegenübergestellt.

Beispiel 1

Ein nach dem Sulfatverfahren hergestelltes $TiO_2$-Pigment mit Rutilstruktur wurde mit 1 % $ZrO_2$, 1,3 % $SiO_2$ und 2,5 % $Al_2O_3$ anorganisch nachbehandelt und nach den üblichen Wasch- und Filtrationsschritten getrocknet. Das Pigment weist eine spezifische Oberfläche von 15 $m^2/g$ auf. Das Pigment wird mit 0,75 % eines Organopolysiloxans der Formel

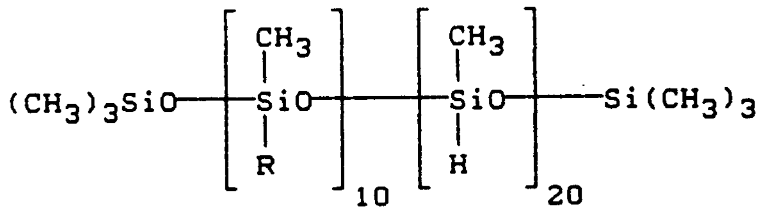

R = Gemisch aus $C_{12}H_{25}$ und $C_{14}H_{29}$ ca. 2:1
besprüht und in einer mit überhitztem Wasserdampf betriebenen Strahlmühle mikronisiert.

Vergleichsbeispiel A

Das im Beispiel 1 eingesetzte Rutilpigment wird nach dem Trocknen mit 0,75 % eines Polyorganohydrogensiloxans der Formel

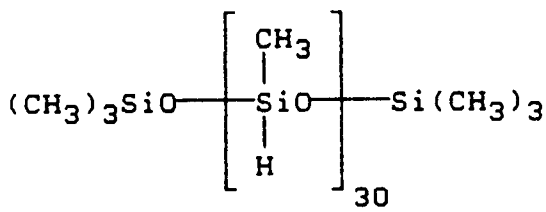

besprüht und analog Beispiel 1 mikronisiert.

Beispiel 2

Ein nach dem Sulfatverfahren hergestelltes $TiO_2$-Pigment mit Rutilstruktur wurde mit 1 % $Al_2O_3$ anorganisch nachbehandelt und nach den üblichen Wasch- und Filtrationsschritten getrocknet. Das Pigment weist eine spezifische Oberfläche von 11 $m^2$/g auf. Das Pigment wird mit 0,17 % des Organopolysiloxans aus Beispiel 1 und 0,33 % des Polyorganohydrogensiloxans aus Vergleichsbeispiel A besprüht und analog Beispiel 1 mikronisiert.

Vergleichsbeispiel B

Das in Beispiel 2 eingesetzte Pigment wird nach dem Trocknen mit 0,5 % des Polyorganohydrogensiloxans aus Vergleichsbeispiel A und zusätzlich mit 0,5 % Dioctylphthalat besprüht und analog Beispiel 1 mikronisiert.

Beispiel 3

In den nassen Filterkuchen des im Beispiel 2 eingesetzten Rutilpigmentes wird 0,5 % eines Organopolysiloxans der Formel

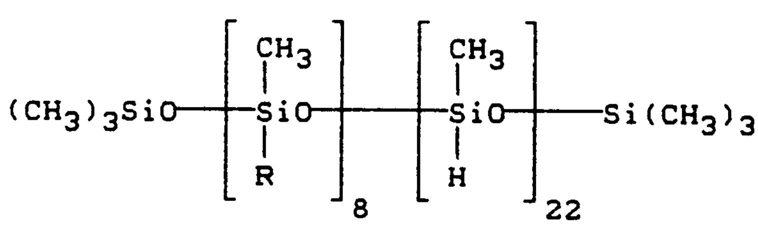

R wie in Beispiel 1
eingeknetet. Nach dem Trocknen wird analog Beispiel 1 mikronisert.

Beispiel 4

Das im Beispiel 2 eingesetzte Rutilpigment wird nach dem Trocknen mit 0,5 % eines Organopolysiloxans der Formel

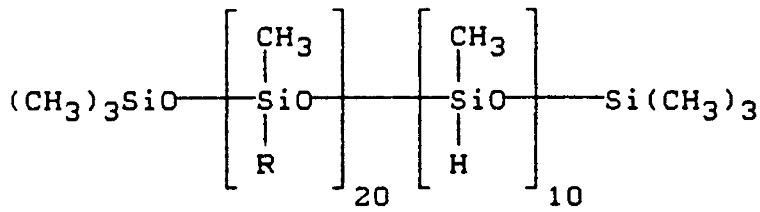

R wie in Beispiel 1,
besprüht und analog Beispiel 1 mikronisiert.

Beispiel 5

Das im Beispiel 2 eingesetzte Rutilpigment wird nach dem Trocknen mit 0,5 % eines Organopolysiloxans der Formel

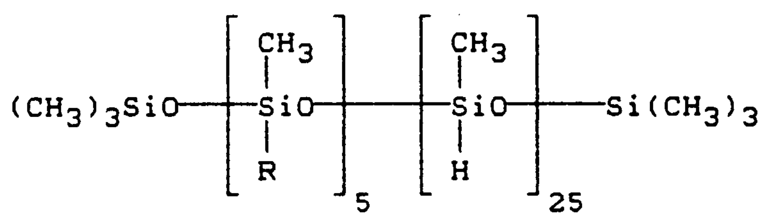

R = $C_{18}H_{37}$
besprüht und analog Beispiel 1 mikronisiert.

Beispiel 6

Das im Beispiel 2 eingesetzte Rutilpigment wird nach dem Trocknen mit 0,5 % eines Organopolysiloxans der Formel

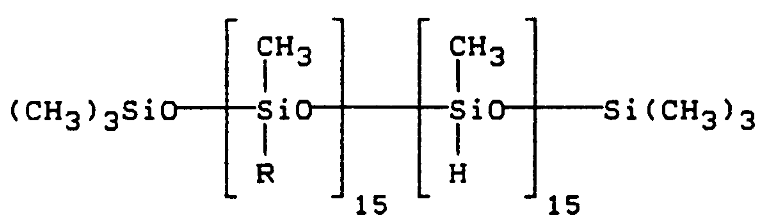

R = $C_6H_{13}$
besprüht und analog Beispiel 1 mikronisiert.

Beispiel 7

Das in Beispiel 2 eingesetzte Rutilpigment wird nach dem Trocknen mit 0,5 % eines Organopolysilo-

xans der Formel

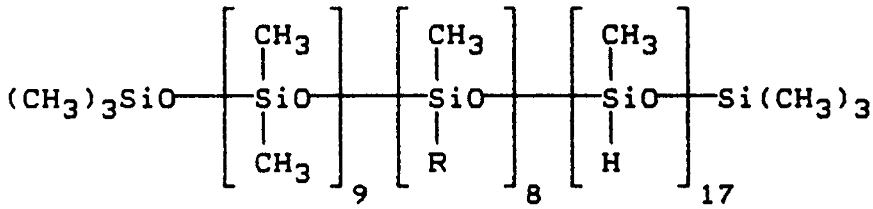

R wie in Beispiel 1,
besprüht und analog Beispiel 1 mikronisiert.

Beispiel 8

Ein nach dem Sulfatverfahren hergestelltes $TiO_2$-Pigment mit Rutilstruktur, das anorganisch nicht nachbehandelt wurde und eine spezifische Oberfläche von 9 $m^2/g$ aufweist, wird mit 1,0 % des Organopolysiloxans aus Beispiel 3 besprüht und analog Beispiel 1 mikronisiert.

Vergleichsbeispiel C

Das in Beispiel 8 eingesetzte Rutilpigment wird mit 1,0 % des Polymethylhydrogensiloxans aus Vergleichsbeispiel A besprüht und analog Beispiel 1 mikronisiert.

Beispiel 9

Ein Eisenoxidrotpigment mit einer spezifischen Oberfläche von 9,5 $m^2/g$ wird mit 0,6 % des Organopolysiloxans aus Beispiel 3 besprüht und analog Beispiel 1 mikronisiert.

Vergleichsbeispiel D

Das in Beispiel 9 eingesetzte Eisenoxidrotpigment wird mit 0,6 % des Polymethylhydrogensiloxans aus Vergleichsbeispiel A besprüht und analog Beispiel 1 mikronisiert.

Beispiel 10

Ein Chromoxidgrünpigment mit einer spezifischen Oberfläche von 4,0 $m^2/g$ wird 0,4 % des Organopolysiloxans aus Beispiel 3 besprüht und analog Beispiel 1 mikronisiert.

Beispiel 11

Ein Chromrutilgelbpigment mit einer spezifischen Oberfläche von 6,2 $m^2/g$ wird mit 0,4 % des Organopolysiloxans aus Beispiel 3 besprüht und analog Beispiel 1 mikronisiert.

Beispiel 12

Ein gefällter Calciumcarbonat-Füllstoff mit einer spezifischen Oberfläche von 6,8 $m^2/g$ wird mit 0,4 % des Organopolysiloxans aus Beispiel 3 besprüht und analog Beispiel 1 mikronisiert.

Vergleichsbeispiel E

Das in Beispiel 12 eingesetzte Calciumcarbonat wird mit 0,4 % des Polymethylhydrogensiloxans aus Vergleichsbeispiel A besprüht und analog Beispiel 1 mikronisiert.

Beispiel 13

Eine gefällte Kieselsäure mit einer spezifischen Oberfläche von 190 $m^2/g$ mit 3,0 % des Organopolysiloxans aus Beispiel 3 besprüht und analog Beispiel 1 mikronisiert.

Eine Staubmessung ist nicht möglich, da das Produkt extrem voluminös anfällt. Nach visueller Beurteilung ist die Staubentwicklung deutlich geringer als bei Modifizierung dieser Kielselsäure mit dem Polymethylhydrogensiloxan aus Vergleichsbeispiel A.

Beispiel 14

Ein nach dem Sulfatverfahren hergestelltes $TiO_2$-Pigment mit Rutilstruktur wurde mit 1 % $Al_2O_3$ anorganisch nachbehandelt. Anschließend wurde das Pigment filtriert und mit entsalztem Wasser gewaschen. Der Filterkuchen wurde mit so viel entsalztem Wasser verdünnt, daß eine Aufschlämmung mit 50 % Feststoffgehalt erhalten wurde. In diese Aufschlämmung wurde 1,0 % (bezogen auf das Pigment) eines Organopolysiloxans der Formel

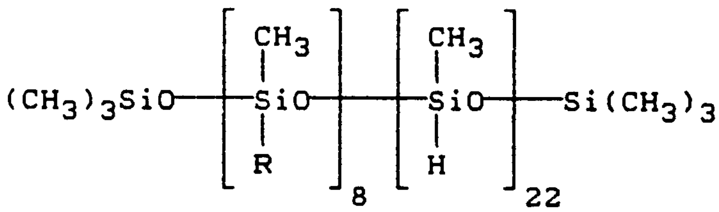

mit R = Gemisch aus $C_{12}H_{25}$ und $C_{14}H_{29}$ ca. 2 : 1 eingerührt. Die Suspension wurde in einem Zerstäubungstrockner getrocknet.

Vergleichsbeispiel F

Das in Beispiel 14 eingesetzte $TiO_2$-Pigment wurde nach der Nachbehandlung mit 1 % $Al_2O_3$ einer Sandmahlung unterworfen. Anschließend wurde das Pigment wie in Beispiel 1 filtriert, gewaschen und die Aufschlämmung auf 50 % Feststoffgehalt eingestellt.

Die Zerstäubungstrocknung erfolgt ohne Zugabe eines Organopolysiloxans.

Beispiel 15

Der Filterkuchen des in Beispiel 14 eingesetzten $TiO_2$-Pigmentes wurde durch Zugabe von 0,1 % Ameisensäure (bezogen auf Pigment) verflüssigt. Der Feststoffgehalt der Suspension betrug 61%. Anschließend wurden 0,7 % des Organopolysiloxans aus Beispiel 1 und zusätzlich 0,3 % eines Polyorganohydrogensiloxans der Formel

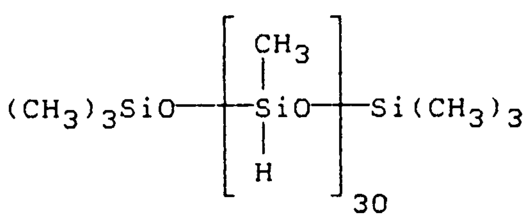

(beide bezogen auf Pigment) in die Aufschlämmung eingerührt und diese in einem Zerstäubungstrockner getrocknet.

Beispiel 16

In ein mit Eisenoxidrot Bayferrox 110 (Handelsprodukt BAYER AG) gefülltes Mischaggregat werden 0,5 Gew.-% des Organopolysiloxans aus Beispiel 3 zugegeben. Nach Herstellung einer homogenen Mischung wird das Eisenoxid auf einer Pendelmühle gemahlen.

Vergleichsbeispiel G:

In ein mit Eisenoxidrot Bayferrox 110 (Handelsproudkt BAYER AG) gefülltes Mischaggregat werden 0,5 Gew.-% des Polymethylhydrogensiloxans aus Vergleichsbeispiel A gegeben. Nach Herstellung einer homogenen Mischung wird das Eisenoxid auf einer Pendelmühle gemahlen.

Vergleichsbeispiel H:

In ein mit Eisenoxidrot Bayferrox 110 (Handelsprodukt BAYER AG) gefülltes Mischaggregat werden 0,15 Gew.-% Polypropylenglykol zugegeben. Nach Herstellung einer homogenen Mischung wird das Eisenoxid auf einer Pendelmühle gemahlen.

Beispiel 17

In ein mit Eisenoxidschwarz Bayferrox 8600 (Handelsprodukt BAYER AG) gefülltes Mischaggregat werden 0,5 Gew.-% des Organopolysiloxans aus Beispiel 3 zugegeben. Nach Herstellung einer homogenen Mischung wird das Eisenoxid auf einer Pendelmühle gemahlen.

Vergleichsbeispiel I:

In ein mit Eisenoxidschwarz Bayferrox 8600 (Handelsprodukt BAYER AG) gefülltes Michaggregat werden 0,15 Gew.-% Polypropylenglykol zugegeben. Nach Herstellung einer homogenen Mischung wird das Eisenoxid auf einer Pendelmühle gemahlen.

Durch die Hydrophobierung im Beispiel 17 wird bei unveränderten magnetischen Eigenschaften und geringer Staubentwicklung eine deutlische Verbesserung der Dispergierbarkeit bei der Herstellung von magnetischen Tonern erreicht.

T a b e l l e   1

| Beispiel | Grad der Hydrophobierung | Staubentwicklung (gemessene Extinktion) | Dispergierbarkeit in PE | Dispergierbarkeit in PVC | Pigmenttyp |
|---|---|---|---|---|---|
| 1 | vollständig | gering (0,07) | sehr gut | sehr gut | $TiO_2$-Pigment nachbehandelt mit 1 % $ZrO_2$, 1,3 % $SiO_2$, 2,5 % $Al_2O_3$ |
| A | weitgehend | sehr stark (1,01) | sehr gut | gut | |
| 2 | vollständig | sehr gering (0,04) | sehr gut | sehr gut | $TiO_2$-Pigment nachbehandelt mit 1 % $Al_2O_3$ |
| B | weitgehend | mäßig (0,15) | mäßig | mäßig | |
| 3 | vollständig | sehr gering (0,02) | sehr gut | sehr gut | |
| 4 | vollständig | sehr gering (0,02) | sehr gut | sehr gut | |
| 5 | vollständig | sehr gering (0,04) | sehr gut | sehr gut | |
| 6 | vollständig | gering (0,05) | sehr gut | sehr gut | |
| 7 | vollständig | sehr gering (0,04) | sehr gut | sehr gut | |
| 8 | vollständig | sehr gering (0,03) | sehr gut | gut | $TiO_2$-Pigment nicht anorganisch nachbehandelt |
| C | vollständig | stark (0,31) | sehr gut | gut | |
| 9 | vollständig | sehr gering (0,03) | sehr gut | gut | Eisenoxidpigment |
| D | vollständig | sehr stark (0,65) | sehr gut | gut | |

T a b e l l e 1 (Fortsetzung)

| Beispiel | Grad der Hydrophobierung | Staubentwicklung (gemessene Extinktion) | Dispergierbarkeit in PE | Dispergierbarkeit in PVC | Pigmenttyp |
|---|---|---|---|---|---|
| 10 | vollständig | sehr gering (0,02) | sehr gut | gut | Chromoxidgrün-pigment |
| 11 | vollständig | sehr gering (0,01) | sehr gut | gut | Chromrutilgelb-pigment |
| 12 | vollständig | gering (0,05) | sehr gut | sehr gut | Calciumcarbo-nat |
| E | vollständig | sehr stark (0,41) | sehr gut | sehr gut | Füllstoff |
| 13 | vollständig | nicht meßbar | sehr gut | sehr gut | gefällte Kieselsäure |

Tabelle 2

| Beispiel | mittler Durchmesser der Granulate | Fließverhalten | Dispergierbarkeit in PE | Kerbschlagzähigkeit in ABS |
|---|---|---|---|---|
| 14 | 94 µm | sehr gut | sehr gut (2 Stippen/0,4$m^2$) | sehr gut (9,1 KJ/$m^2$) |
| F | 88 µm | sehr gut | schlecht (100 Stippen/0,4$m^2$) | schlecht (5,2 KJ/$M^2$) |
| 15 | 107 µm | sehr gut | sehr gut (0 Stippen/0,4m2) | sehr gut (9,0 KJ/$m^2$) |

Tabelle 3 Qualitätsdaten von Eisenoxidrotpigmenten

| Beispiel | Farbabstand zum Vergleichsbeispiel H[a) ] 10 % PVK Alkydal F 48 CIELAB C/2grd | | | Staubentwicklung bei der Mahlung |
|---|---|---|---|---|
| | Farbstättigung $\Delta C^*$ | Rotton $\Delta a^*$ | Gelbton $\Delta b^*$ | |
| G | 1,8 | 1,0 | 1,5 | stark |
| 16 | 1,5 | 0,9 | 1,4 | gering |

a) Bestimmung des Farbabstandes der Pigmente aus Beispiel G und 16 gegen Vergleichsbeispiel H im Lack Alkydal F 48, Handelsprodukt BAYER AG, gemäß DIN 6174 (äquivalent ISO/DIN 7724, 1-3 drafts)

Tabelle 4 Qualitätsdaten von Magnetpigmenten

| Beispiel | Hydrohobie | Ölzahl | Koerzitivkraft bei 3,5 KOe | Staubentwicklung |
|---|---|---|---|---|
| 17 | ja | 21 | 88 | gering |
| I | nein | 32 | 89 | gering |

## Patentansprüche

1. Hydrophobe Farb- und Magnetpigmente und Füllstoffe mit einem Gehalt von 0,05 bis 10 Gew.-% an Organopolysiloxanen der allgemeinen Formel

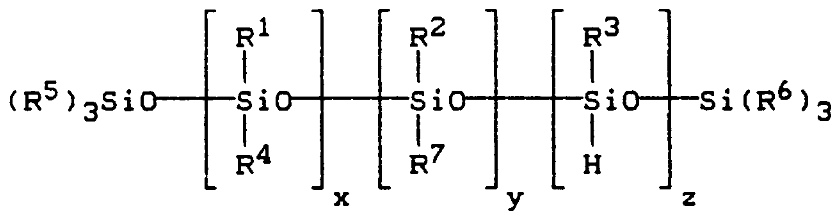

wobei in der allgemeinen Formel
x = 0 bis 500,
y = 5 bis 500,
z = 5 bis 500,
$R^1$, $R^2$, $R^3$, $R^4$, $R^5$ und $R^6$ unabhängig voneinander für einen gesättigten und/oder ungesättigten, gegebenenfalls auch verzweigten Alkylrest mit 1 bis 4 C-Atomen und/oder für einen Arylrest mit 6 bis 9 C-Atomen stehen, der gegebenenfalls auch alkylsubstituiert sein kann,
$R^7$ = für einen Alkylrest mit 6 bis 18 C-Atomen steht und
wobei von der Anzahl der an Si gebundenen Reste jeweils mindestens 3 % $R^7$ und H sind.

**2.** Hydrophobe Farb- und Magnetpigmente und Füllstoffe gemäß Anspruch 1, dadurch gekennzeichnet, daß die Reste $R^1$, $R^2$, $R^3$, $R^4$, $R^5$ und $R^6$ für Methylgruppen stehen.

**3.** Hydrophobe Farb- und Magnetpigmente und Füllstoffe gemäß Anspruch 1 oder 2 dadurch gekennzeichnet, daß
x = 0 bis 100,
y = 5 bis 100,
z = 5 bis 100,
wobei z + y + z = 25 bis 300
und $R^7$ von der Anzahl der an Si gebundenen Reste mindestens 3 % $R^7$ und mindestens 10 % H sind.

**4.** Hydrophobe Farb- und Magnetpigmente und Füllstoffe gemäß einem der Ansprüche 1 bis 3, dadurch gekennzeichnet, daß
x = 0,
y = 5 bis 50,
z = 5 bis 60,
wobei y + z größer 25 ist und von der Anzahl der an Si gebundenen Reste mindestens 10 % $R^7$ und mindestens 30 % H sind.

**5.** Hydrophobe Farb- und Magnetpigmente und Füllstoffe gemäß einem oder mehrerer der Ansprüche 1 bis 4, dadurch gekennzeichnet, daß $R^7$ für einen Dodecyl-und/oder Tetradecylrest steht.

**6.** Hydrophobe Farb- und Magnetpigmente und Füllstoffe mit einem Gehalt von 0,05 bis 10 Gew.-% einer Kombination von Organopolysiloxanen gemäß den Ansprüchen 1 bis 5 und Polyorganohydrogensiloxanen der allgemeinen Formel

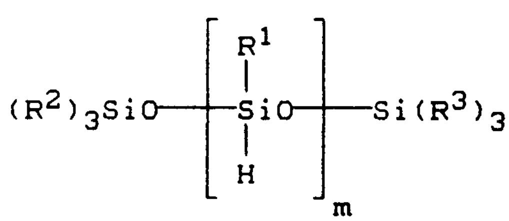

wobei in der allgemeinen Formel
m = 5 bis 200, die Reste $R^1$, $R^2$, $R^3$ unabhängig voneinander die in Anspruch 1 stehende Bedeutung haben und Organopolysiloxane und Polyorganohydrogensiloxane im Mengenverhältnis 4:1 bis 1:4

vorliegen.

7. Hydrophobe Farb- und Magentpigmente und Füllstoffe gemäß einem oder mehreren der Ansprüche 1 bis 6, dadurch gekennzeichnet, daß der Anteil des Organopolysiloxans oder der Kombination Organopolysiloxan/Polyorganohydrogensiloxan 0,1 bis 5 Gew.-%, bezogen auf die Pigment- und/oder Füllstoffmenge, beträgt.

8. Hydrophobe Farb- und Magnetpigmente gemäß einem oder mehreren der Ansprüche 1 bis 7, dadurch gekennzeichent, daß die Pigmente granuliert sind und der Anteil des Organopolysiloxans oder der Kombination Organopolysiloxan/Polyorganohydrogensiloxan 0,3 bis 5 Gew.-%, bezogen auf die Pigmentmenge, beträgt.

9. Verfahren zur Herstellung von hydrophoben Farb- und Magnetpigmenten und Füllstoffen gemäß den Ansprüchen 1 bis 8, dadurch gekennzeichnet, daß das Organopolysiloxan oder die Kombination Organopolysiloxan/Polymethylhydrogensiloxan als Gemisch oder getrennt in beliebiger Reihenfolge dem Pigment und/oder Füllstoff vor und/oder während einer abschließenden Mahlung oder vor und/oder während einer Zerstäubungstrocknung zugesetzt wird.

10. Verwendung der hydrophoben Farb- und Magnetpigmente und Füllstoffe gemäß den Ansprüchen 1 bis 9 zur Einarbeitung in Kunststoffe, Lacke, Baustoffe, magnetische Informationsträger und Toner.

**Claims**

1. Hydrophobic colour and magnetic pigments and fillers containing from 0.05 to 10% by weight of organopolysiloxanes corresponding to the following general formula

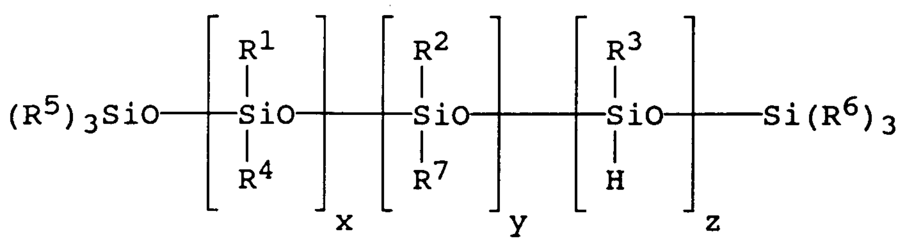

wherein
x = 0 to 500,
y = 5 to 500,
z = 5 to 500,
$R^1$, $R^2$, $R^3$, $R^4$, $R^5$ and $R^6$ denote, independently of one another, a saturated and/or unsaturated, optionally branched alkyl group having 1 to 4 carbon atoms and/or an aryl group having 6 to 9 carbon atoms which may also be alkyl substituted,
$R^7$ = an alkyl group having 6 to 18 carbon atoms and
at least 3 % of the number of groups attached to Si are $R^7$ and H.

2. Hydrophobic colour and magnetic pigments and fillers according to Claim 1, characterised in that the groups $R^1$, $R^2$, $R^3$, $R^4$, $R^5$ and $R^6$ are methyl groups.

3. Hydrophobic colour and magnetic pigments and fillers according to Claim 1 or Claim 2, characterised in that
x = 0 to 100,
y = 5 to 100,
z = 5 to 100
and x + y + z = 25 to 300
and at least 3 % of the number of groups attached to Si are $R^7$ and at least 10 % are H.

4. Hydrophobic colour and magnetic pigments and fillers according to one of the Claims 1 to 3,

characterised in that
x = 0,
y = 5 to 50,
z = 5 to 60
and y + z is greater than 25 and at least 10 % of the number of groups attached to Si are $R^7$ and at least 30 % are H.

5. Hydrophobic colour and magnetic pigments and fillers according to one or more of Claims 1 to 4, characterised in that $R^7$ stands for a dodecyl and/or tetradecyl group.

6. Hydrophobic colour and magnetic pigments and fillers containing from 0.05 to 10% by weight of a combination of organopolysiloxanes according to Claims 1 to 5 and polyorganohydrogen siloxanes corresponding to the following general formula

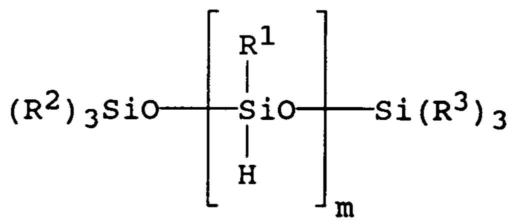

wherein m = 5 to 200, the groups $R^1$, $R^2$ and $R^3$, which are independent of one another, have the meanings indicated in Claim 1, and organopolysiloxanes and polyorganohydrogen siloxanes are present in a quantitative ratio of from 4:1 to 1:4.

7. Hydrophobic colour and magnetic pigments and fillers according to one or more of Claims 1 to 6, characterised in that the proportion of organopolysiloxane or of the combination of organopolysiloxane/polyorganohydrogen siloxane is from 0.1 to 5 % by weight, based on the quantity of pigment and/or filler.

8. Hydrophobic colour and magnetic pigments according to one or more of Claims 1 to 7, characterised in that the pigments are granulated and the proportion of organopolysiloxane or of the combination of organopolysiloxane/polyorganohydrogen siloxane is from 0.3 to 5 % by weight, based on the quantity of pigment.

9. A process for the preparation of hydrophobic colour and magnetic pigments and fillers according to Claims 1 to 8, characterized in that the organopolysiloxane or the combination of organopolysiloxane/polymethylhydrogen siloxane is added to the pigment and/or filler as a mixture or separately in any sequence before and/or during a final grinding and before and/or during a spray drying.

10. Use of the hydrophobic colour and magnetic pigments and fillers according to Claims 1 to 9 for incorporation in synthetic resins, lacquers, building materials, magnetic information carriers and toners.

**Revendications**

1. Pigments colorants et magnétiques et charges hydrophobes ayant une teneur de 0,05 à 10% en poids en organopolysiloxanes répondant à la formule générale :

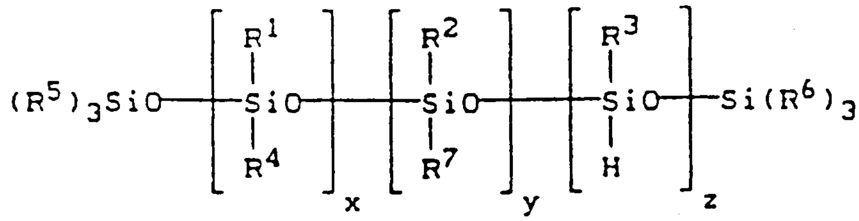

formule générale dans laquelle
x = 0 à 500,
y = 5 à 500,
z = 5 à 500,
$R^1$, $R^2$, $R^3$, $R^4$, $R^5$ et $R^6$ représentent, indépendamment l'un de l'autre, un radical alkyle saturé et/ou insaturé, éventuellement également ramifié, contenant de 1 à 4 atomes de carbone et/ou un radical aryle contenant de 6 à 9 atomes de carbone, qui peut éventuellement également être substitué par un radical alkyle,
$R^7$ représente un radical alkyle contenant de 6 à 18 atomes de carbone et
dans laquelle respectivement 3% au moins du nombre des radicaux liés à Si représentent $R^7$ et H.

**2.** Pigments colorants et magnétiques et charges hydrophobes selon la revendication 1, caractérisés en ce que les radicaux $R^1$, $R^2$, $R^3$, $R^4$, $R^5$ et $R^6$ représentent des radicaux méthyle.

**3.** Pigments colorants et magnétiques et charges hydrophobes selon la revendication 1 ou 2, caractérisés en ce que
x = 0 à 100,
y = 5 à 100,
z = 5 à 100,
où x + y + z = 25 à 300
et dans laquelle, au moins 3% du nombre des radicaux liés à Si représentent $R^7$ et au moins 10% d'entre eux représentent H.

**4.** Pigments colorants et magnétiques et charges hydrophobes selon une des revendications 1 à 3, caractérisés en ce que
x = 0,
y = 5 à 50,
z = 5 à 60,
où y + z est plus grand que 25 et dans laquelle, au moins 10% des radicaux liés à Si représentent $R^7$ et au moins 30% d'entre eux représentent H.

**5.** Pigments colorants et magnétiques et charges hydrophobes selon une ou plusieurs des revendications 1 à 4, caractérisés en ce que $R^7$ représente un radical dodécyle et/ou tétradécyle.

**6.** Pigments colorants et magnétiques et charges hydrophobes ayant une teneur de 0,05 à 10% en poids d'une combinaison d'organopolysiloxanes selon les revendications 1 à 5 et de polyorganohydrogénosiloxanes répondant à la formule générale

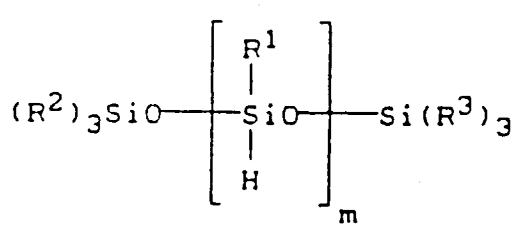

formule dans laquelle

m = 5 à 200 et les radicaux $R^1$, $R^2$, $R^3$, indépendamment l'un de l'autre, ont la signification mentionnée dans la revendication 1, et les organopolysiloxanes et les polyorganohydrogénosiloxanes sont présents dans un rapport quantitatif de 4:1 à 1:4.

**7.** Pigments colorants et magnétiques et charges hydrophobes selon une ou plusieurs des revendications 1 à 6, caractérisés en ce que la fraction de l'organopolysiloxane ou de la combinaison d'organopolysiloxane/polyorganohydrogénosiloxane s'élève à 0,1-5% en poids rapportée à la quantité de pigment et/ou de charge.

**8.** Pigments colorants et magnétiques hydrophobes selon une ou plusieurs des revendications 1 à 7, caractérisés en ce que les pigments sont granulés et la fraction de l'organopolysiloxane ou de la combinaison d'organopolysiloxane/polyorganohydrogénosiloxane s'élève à 0,3-5% en poids rapportée à la quantité de pigment.

**9.** Procédé de préparation de pigments colorants et magnétiques et de charges hydrophobes selon les revendications 1 à 8, caractérisé en ce qu'on ajoute au pigment et/ou à la charge l'organopolysiloxane ou la combinaison d'organopolysiloxane/polyorganohydrogénosiloxane sous forme d'un mélange ou sous forme séparée dans n'importe quel ordre avant et/ou pendant un broyage terminal ou bien avant et/ou pendant un séchage par pulvérisation.

**10.** Mise en oeuvre de pigments colorants et magnétiques et des charges hydrophobes selon les revendications 1 à 9, pour l'incorporation dans des matières synthétiques, des laques, des vernis ou des peintures, des matériaux de construction, des supports magnétiques d'information et des toners.